# EUROPEAN PATENT APPLICATION

(11) **EP 4 369 501 A1**
(43) Date of publication of application: **15.05.2024**
(21) Application number: 23207943.4
(22) Date of filing: 06.11.2023
(51) Int. Cl.: H01M 50/342, H01M 10/658, H01M 50/103, H01M 50/553, H01M 50/578, H01M 50/548, H01M 50/595

(54) **SECONDARY BATTERY**

(30) Priority: 07.11.2022 US 202263423446 P; 21.07.2023 KR 20230095337
(71) Applicant: Samsung SDI Co., Ltd., Yongin-si, Gyeonggi-do 17084 (KR)
(72) Inventor: KIM, Jeong Ho, 17084 Yongin-si (KR); KIM, Myung Chul, 17084 Yongin-si (KR); JEON, Du Seong, 17084 Yongin-si (KR); KIM, Dong Hyeong, 17084 Yongin-si (KR)
(74) Representative: Marks & Clerk LLP

(57) **Abstract**

The present disclosure provides a secondary battery in which a heat insulation member is attached onto a vent to protect a cell from flames. The secondary battery includes a case having the vent on one side, an electrode assembly in the case, a pair of terminals coupled to respective sides of the case, and electrically connected to the electrode assembly, and a heat insulation member coupled to a surface of the case, and covering a region corresponding to the vent.

## Description

### BACKGROUND

### 1. Field

The present disclosure relates to a secondary battery.

### 2. Description of the Related Art

Unlike a primary battery that cannot be charged, a secondary battery is a battery that can be charged and discharged. Low-capacity secondary batteries are widely employed in portable small-sized electronic devices, such as smart phones, feature phones, notebook computers, digital cameras, or camcorders. In one or more embodiments, large-capacity secondary batteries are widely used as power sources for driving motors of hybrid vehicles or electric vehicles. The secondary battery includes an electrode assembly having positive and negative electrodes, a case accommodating the electrode assembly, electrode terminals connected to the electrode assembly, and so on.

The above information disclosed in this Background section is only for enhancement of understanding of the background of the disclosure, and therefore may contain information that does not constitute prior art.

### SUMMARY

The present disclosure provides a secondary battery in which a heat insulation member is attached onto a vent to protect a cell from flames.

A secondary battery according to the present disclosure includes a case having a vent on one side, an electrode assembly in the case, a pair of terminals coupled to respective sides of the case, and electrically connected to the electrode assembly, and a heat insulation member coupled to a surface of the case, and covering a region corresponding to the vent.

The vent may be on a short side of the case between the terminals.

The heat insulation member may include an insulating material containing MICA.

The heat insulation member may be attached onto the surface of the case.

The heat insulation member may be coupled through an insulation film positioned on the case.

The heat insulation member may further include an adhesive layer on a side facing the case.

The heat insulation member may further include a stitch corresponding to the vent of the case.

The stitch may match within the region of the vent.

The stitch may include at least two lines that cross each other within the region of the vent.

The stitch may include a line along an outline of the vent.

The stitch may include perforations.

At least some of the above and other features of the invention are set out in the claims.

### BRIEF DESCRIPTION OF DRAWINGS

FIGS. 1A and 1B are a perspective view and a cross-sectional view showing a secondary battery according to one or more embodiments of the present disclosure.
FIGS. 2A to 2E are schematic diagrams showing a method for manufacturing a secondary battery according to one or more embodiments.
FIGS. 3A to 3C show shapes of stitches of a heat insulation member coupled to a vent according to one or more embodiments.
FIGS. 4A and 4B are schematic diagrams showing states before and after the operation of a vent in a secondary battery having a heat insulation member according to one or more embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In one or more embodiments, this may collectively mean a direct or indirect coupling or connection and an integral or nonintegral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In one or more embodiments, in the present specification, when a portion of a layer, a film, an area, a plate, or the like is formed on another portion, a forming direction is not limited to an upper direction but includes forming the portion on a side surface or in a lower direction. In one or more embodiments, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of' when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "secondcategory (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A battery pack includes at least one battery module, and includes a pack housing in which a receiving space is defined to accommodate the at least one battery module.

The battery module may include a plurality of battery cells and a module housing. The battery cells may be accommodated inside the module housing in a stacked form. The battery cell may be provided with a positive electrode lead and a negative electrode lead. The battery cell may be a circular type, a square type, or a pouch type battery cell depending on the battery type.

Instead of the battery module, the battery pack may consist of a cell stack stacked together to form one module. The cell stack may be accommodated in a receiving space of a pack housing, or may be accommodated in a receiving space partitioned by a frame, a partition wall, etc.

The battery cell may generate a relatively large amount of heat during charging/discharging. The generated heat may accumulate in the battery cell, and may accelerate the deterioration of the battery cell. In one or more embodiments, the battery pack further includes a cooling member to suppress the deterioration of the battery cell. The cooling member is provided at the lower side the receiving space where the battery cell is provided, but the position of the cooling member is not limited thereto. The cooling member may be provided at the upper or lateral side, depending on battery pack.

In the battery cell, the exhaust gas generated inside the battery cell under an abnormal operating condition, which is also known as a thermal runaway or thermal event, may be discharged to the outside of the battery cell. The battery pack or the battery module may be provided with an exhaust port for discharging exhaust gas to reduce or prevent damage to the battery pack or module.

The battery pack may include a battery, and a battery management system (BMS) for managing the battery. The battery management system may include a detection device, a balancing device, and a control device. A battery module may include a plurality of cells connected to each other in series and/or parallel. Battery modules may be connected to each other in series and/or parallel connection.

The detection device may detect the state of the battery (voltage, current, temperature, etc.) and may detect state information indicating the state of the battery. The detection device may detect the voltage of each cell or each battery module of the battery. The detection device may detect the current flowing through each battery module of the battery module or battery pack. The detection device may detect the cell and/or module and/or ambient temperature at one or more points of the battery.

The balancing device may perform a balancing operation of battery modules and/or of cells of a battery. The control device may receive state information (voltage, current, temperature, etc.) of the battery module from the detection device. The control device can monitor and calculate the state of the battery module (voltage, current, temperature, state of charge (SOC), state of health (SOH), etc.) based on the state information received from the detection device. In one or more embodiments, the control device may perform control functions (e.g., temperature control, balancing control, charge/discharge control, etc.) and protection functions (e.g., reduction or prevention of the likelihood of overdischarge, overcharge, overcurrent, short circuit, fire extinguishing function, etc.) based on the state monitoring results, etc. In one or more embodiments, the control device may perform a wired or wireless communication function with an external device of the battery pack (for example, a higher-level controller, vehicle, charger, or PCS).

The control device may control the charging/discharging operation and the protection operation of the battery. For this purpose, the control device may include a charge/discharge control unit, a balancing control unit, and a protection unit.

The battery management system, which is a system that monitors the state of battery and that performs diagnosis, control, communication, and protection functions, may calculate the charge and discharge state, battery life, and/or state of health (SOH), and, as suitable, may cut off battery power (relay control). In one or more embodiments, the battery management system may control thermal management (cooling, heating, etc.), may perform a high-voltage interlock function, and may detect or calculate insulation and short-circuit conditions.

A relay may be a mechanical contactor, and may be turned on and off by the magnetic force of a coil, or a semiconductor switch, such as a metal oxide semiconductor field effect transistor (MOSFET).

The relay control is a function that blocks power supply from a battery if a problem occurs in a vehicle or a battery system, and may be composed of one or more relays and a precharge relay for positive and negative electrode terminals, respectively.

In the relay control, there may be a risk of inrush current occurring in a high voltage capacitor on an inverter input side if a battery load is connected. In one or more embodiments, to reduce or prevent the likelihood of the inrush current being drawn, and by operating a precharge relay before connecting a main relay if starting a vehicle, a function of connecting to a pre-charge resistor may be provided.

The high-voltage interlock is a circuit for detecting whether or not all high-voltage components in the entire automobile system are connected by using a small signal, and may have a function of forcibly opening the relay if even one part of the entire loop is open.

Hereinafter, the secondary battery of the present disclosure, which is of a battery cell, will be described in more detail.

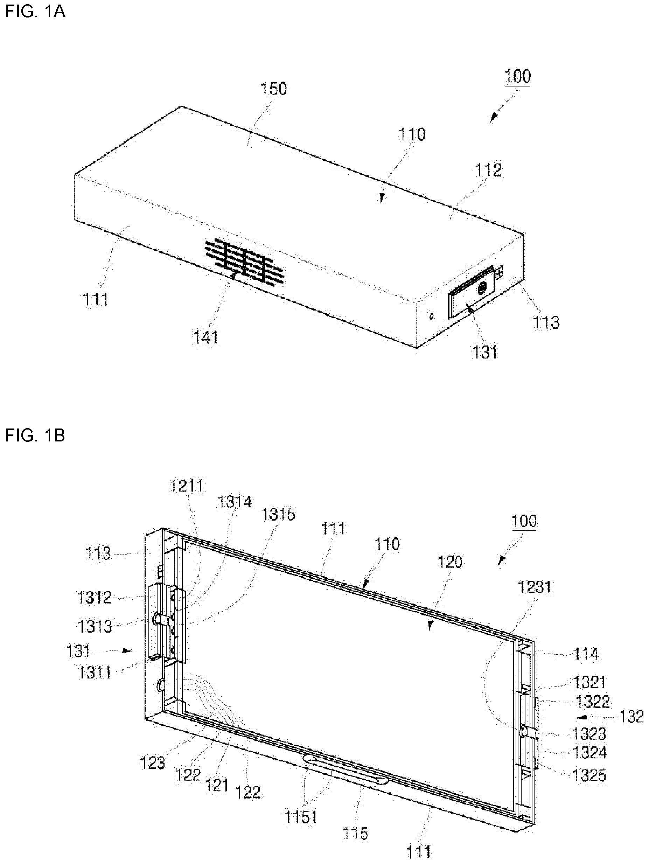

FIGS. 1A and 1B are a perspective view and a cross-sectional view showing a secondary battery 100 according to one or more embodiments of the present disclosure.

As shown in FIGS. 1A and 1B, the secondary battery 100 according to one or more embodiments of the present disclosure includes a case 110, an electrode assembly 120, a pair of terminals 131 and 132, and an insulation film (e.g., external insulation film) 150. In one or more embodiments, a heat insulation member may be between the case 110 and the insulation film 150.

The case 110 may have a flat rectangular parallelepiped shape. In one or more embodiments, the case 110 may include a pair of short sides 111 facing each other, a pair of long sides 112 connecting the pair of short sides 111, a cap plate 113 (or cathode-side cap plate 113) that blocks the short sides 111 and long sides 112 of one side, and a cap plate 114 (or anode-side cap plate 114) that blocks the short sides 111 and long sides 112 of the other side. In one or more embodiments, the cathode-side cap plate 113 may be laser-welded to the short sides 111 and long sides 112 of one side. In one or more embodiments, the anode-side cap plate 114 may be laser-welded to the short sides 111 and long sides 112 of the other side. The case 110 may comprise a can, case (e.g. pouch case etc), housing, or body. In one or more embodiments, the case 110 may comprise aluminium, an aluminium alloy, iron, an iron alloy, an iron-nickel alloy, an iron-nickel-chromium alloy, or stainless steel. The case 110 may accommodate the electrode assembly 120 and an electrolyte, and may protect the same from external environments.

In one or more embodiments, the case 110 may further include a vent 115 provided on at least one short side 111 of the pair of short sides 111. The vent 115 may include a safety valve, a safety vent, a thin film, or a thin portion. In one or more embodiments, the longitudinal direction of the vent 115 may follow the longitudinal direction of the short sides 111, and the vent 115 may be provided at or near the center of the short side 111. In one or more embodiments, the vent 115 may be approximately rectangular or oval shaped. In one or more embodiments, the thickness of the vent 115 is smaller than the thickness of the short side 111, and thus, if the internal pressure of the case 110 is greater than a set pressure or operating pressure, the vent 115 may be ruptured and the internal gas (high-temperature, high-pressure gas) of the case 110 may be released to the outside. In one or more embodiments, the vent 115 may include a notch 1151 in the form of a relatively thinner line so as to be suitably broken at an operating pressure. The notch 1151 may comprise concave holes, grooves, or recesses.

The electrode assembly 120 may include a cathode plate 121, a separator 122, and an anode plate 123. In one or more embodiments, the electrode assembly 120 may be provided in the form of a stack in which the cathode plate 121, the separator 122, the anode plate 123, and the separator 122 are laminated in that order, or may be provided in the form of a rolled jelly roll. The electrode assembly 120 may be shaped of a substantially rectangular parallelepiped that can be accommodated inside the case 110. The electrode assembly 120 may include an electrode group, an electrode, or a cell. In one or more embodiments, the cathode plate 121 may further include a cathode tab 1211 (or cathode multi-tap) that protrudes toward and connects to the cathode terminal 131 on one side. In one or more embodiments, the anode plate 123 may further include an anode tab 1231 (or anode multi-tap) that protrudes toward and is connected to the anode terminal 132 on the other side opposite to the one side.

A pair of terminals 131 and 132 may include a cathode terminal 131 on one side, and an anode terminal 132 on the other side. The terminals 131 and 132 may include a side terminal, a terminal plate, or a terminal portion. In one or more embodiments, a cathode may also be referred to as a positive electrode. In one or more embodiments, an anode may also be referred to as a negative electrode.

In one or more embodiments, the cathode terminal 131 may be coupled through the cathode-side cap plate 113, and may be electrically connected to the cathode tab 1211. In one or more embodiments, the cathode terminal 131 may be insulated from the cathode-side cap plate 113 through an insulating gasket 1311. In one or more embodiments, the cathode terminal 131 may include an outer cathode terminal plate 1312 located on the outside of the cathode-side cap plate 113, a cathode connection portion 1313 penetrating the cathode-side cap plate 113, and an inner cathode terminal plate 1314 located inside the cathode-side cap plate 113. In one or more embodiments, the inner cathode terminal plate 1314 may be electrically connected to a cathode tab 1211 through a cathode lead 1315.

In one or more embodiments, the anode terminal 132 may be coupled through the anode-side cap plate 114, and may be electrically connected to the anode tab 1231. In one or more embodiments, the anode terminal 132 may be insulated from the anode-side cap plate 114 through an insulating gasket 1321. In one or more embodiments, the anode terminal 132 may include an outer anode terminal plate 1322 located on the outside of the anode-side cap plate 114, an anode connection portion 1323 penetrating the anode-side cap plate 114, and an inner anode terminal plate 1324 located inside the anode-side cap plate 114. In one or more embodiments, the inner anode terminal plate 1324 may be electrically connected to the anode tab 1231 through a cathode lead 1325.

The cathode terminal 131 and anode terminal 132 may allow electrical energy to be provided to the electrode assembly 120 (charged), or the electrical energy of the electrode assembly 120 may be provided to an electric device (discharged).

In one or more embodiments, a bus bar may be connected to the cathode terminal 131 and the anode terminal 132, and thus, a plurality of secondary batteries 100 (or battery cells) are electrically connected in series and/or parallel, thereby providing a battery module or battery pack. In one or more embodiments, the cathode terminal 131 may be directly electrically connected to the anode terminal 132 of another secondary battery without a bus bar, and the anode terminal 132 may be directly connected to the cathode terminal 131 of another secondary battery without a bus bar.

The insulation film 150 may cover the case 110. The insulation film 150 may cover a pair of short sides 111 and a pair of long sides 112 of the case 110. In one or more embodiments, the insulation film 150 may expose at least a partial region of the cathode terminal 131 and at least a partial region of the anode terminal 132 to the outside. The insulation film 150 may include an insulation tape or insulation film. The insulation film 150 may include polypropylene (PP), polyethylene (PE), polycarbonate (PC), polyethylene terephthalate (PET), polystyrene (PS), or polyimide (PI). The insulation film 150 serves to insulate the secondary battery 100 from the outside.

In one or more embodiments, as will be described later, a heat insulation member may be further provided between the short side 111 of the case 110 and the insulation film 150. In one or more embodiments, the heat insulation member may be coupled to the short side 111 of the case 110 where the vent 115 is formed, and may include various types of stitches provided in a region corresponding to the vent 115. The stitch 141 may include multiple perforations, multiple punching holes, multiple through holes, or multiple holes. In one or more embodiments, despite the presence of the heat insulation member, the operation of the vent 115 of the case 110 is not restricted, thereby ensuring the safety of the secondary battery 100.

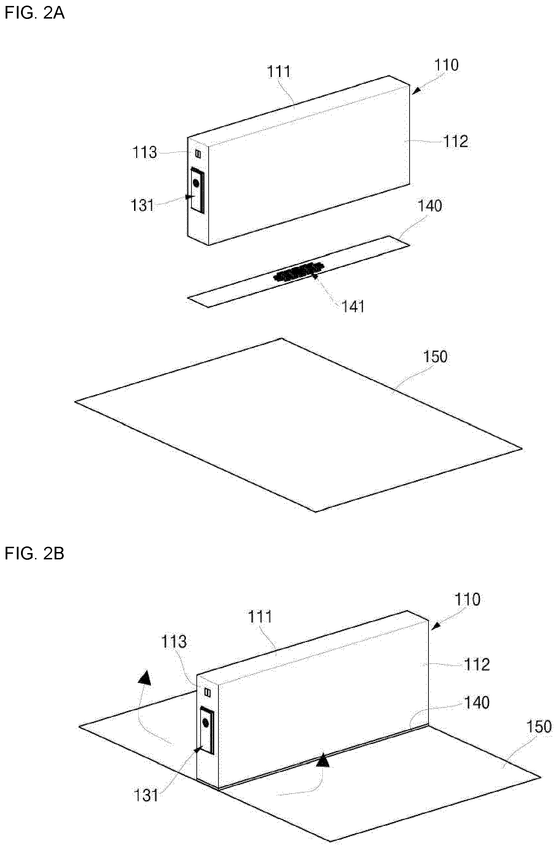

FIGS. 2A to 2E are schematic diagrams showing a method for manufacturing a secondary battery according to one or more embodiments.

As shown in FIG. 2A, a heat insulation member 140 and an insulation film 150 may be provided on the short sides 111 of the case 110.

The heat insulation member 140 may be provided in a substantially rectangular sheet form, and may have a shape corresponding to the short sides 111 of the case 110. In one or more embodiments, the heat insulation member 140 may be made of a material that provides insulation to the case 110 and may include, for example, MICA or aerogel. The heat insulation member 140 is provided to cover the vent 115 among the short sides 111 of the case 110, and may cover the vent 115 from the discharge material generated if an event occurs in the adjacent secondary battery 100. For example, if an event, such as ignition, occurs in one of the plurality of secondary batteries 100 connected in series/parallel, the vent 115 may be opened, and the discharge material inside the cell may be splashed to surrounding areas. In one or more embodiments, because the plurality of secondary batteries 100 are generally arranged in the same direction, the discharge material of the secondary battery 100 in which an event occurs may fly and settle on the short sides 111 and the vent 115 of the adjacent secondary battery 100. In one or more embodiments, to induce an opening operation of the vent 115, the short sides of the case 110 are formed to be relatively thinner than other regions of the case 110, so that the vent 115 is inevitably more vulnerable to discharge material. In one or more embodiments, as a result, the vent 115 of the adjacent secondary battery 100 may be further damaged and opened due to the discharge material, and there is a risk that thermal propagation of the secondary battery 100 may occur.

In one or more embodiments, the heat insulation member 140 is configured to cover the short sides 111 and the vent 115 of the case 110 of the secondary battery 100, and thus, even if the discharge material from the adjacent secondary battery 100 is seated, damage to the short sides 111 and the vent 115 can be reduced or prevented. In one or more embodiments, because the heat insulation member 140 is made of an insulating material, such as MICA or aerogel, the heat insulation member 140 does not simply cover the vent 115, but also blocks the heat of the discharge material on the surface from being transferred to the vent 115.

In one or more embodiments, the heat insulation member 140 may include a stitch 141 in a region corresponding to the vent 115. The stitch 141 may include multiple perforations, multiple punching holes, multiple through holes, or multiple holes. In one or more embodiments, the stitch 141 is formed to overlap at least a portion of the vent 115, so that the vent 115 is opened through the stitch 141 if the vent 115 is opened. For example, the stitch 141 of the heat insulation member 140 may be formed to be the same as or larger than the vent 115 in size, so as not to interfere with the opening operation of the vent 115. In one or more embodiments, for example, the stitch 141 may be formed on a portion of the vent 115 to induce the vent 115 to be opened in a corresponding direction. An example shape of this stitch 141 will be described later.

In one or more embodiments, the insulation film 150 may be in the form of a substantially rectangular tape or film, and in one or more embodiments, stitches may be formed in at least a region corresponding to the vent 115. In one or more embodiments, the insulation film 150 may be provided with an adhesive layer on the entire region or on some regions at the ends thereof. The insulation film 150 may cover both the heat insulation member 140 and the case 110.

As shown in FIG. 2B, the heat insulation member 140 and the case 110 may be seated on the insulation film 150. In one or more embodiments, the lower short sides 111 of the case 110 of the secondary battery 100 may be seated on the heat insulation member 140 and the insulation film 150. Here, in one or more embodiments, the stitch 141 of the heat insulation member 140 may be positioned to correspond to the vent 115 provided on the short sides 111 of the case 110.

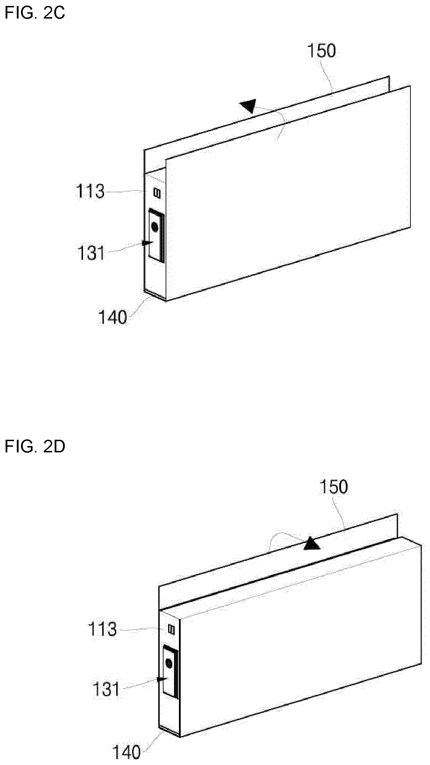

As shown in FIG. 2C, the insulation film 150 may be attached to the long sides 112 of the case 110 of the secondary battery 100. In one or more embodiments, an adhesive layer may also be provided in some regions of the insulation film 150 corresponding to the long sides 112 of the case 110.

As shown in FIG. 2D, the insulation film 150 may be attached to the upper short side 111 of the case 110. In one or more embodiments, one region of the insulation film 150 may be attached to the upper short side 111 of the case 110. In one or more embodiments, an adhesive layer may be provided on one side of the insulation film 150 to be attached to the upper short side 111.

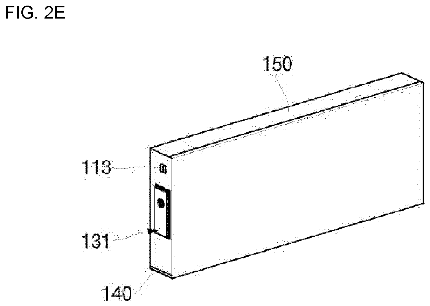

As shown in FIG. 2E, another region of the insulation film 150 may be attached to one region of the insulation film 150. In one or more embodiments, an adhesive layer may be provided on the other region of the insulation film 150 to be adhered to the one region of the insulation film 150. In one or more embodiments, the insulation film 150 may be overlapped and adhered to the short sides 111 of the case 110 opposite the vent 115.

In one or more embodiments, as described above, in addition to a method for combining the case 110 and the heat insulation member 140 by wrapping the insulation film 150 and the case 110 together in a state of being positioned on the short sides 111 of the case 110 without a separate adhesive component, it is also possible to wrap the heat insulation member 140 in a state of being attached to the short sides 111 of the case 110 with an adhesive component provided in the heat insulation member 140.

Hereinafter, the shape of the stitch 141 of the heat insulation member 140 in the secondary battery 100 according to one or more embodiments will be described.

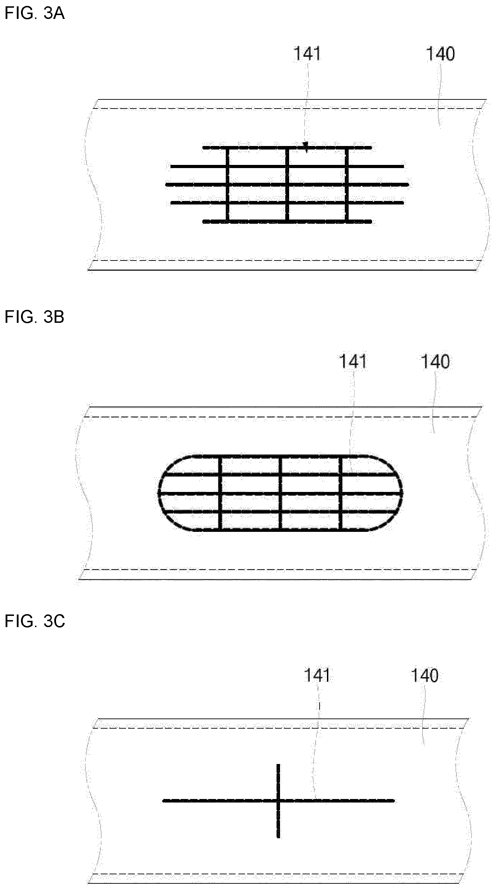

FIGS. 3A to 3C show shapes of stitches of a heat insulation member coupled to a vent in one or more embodiments.

First, referring to FIG. 3A, the stitch 141 of the heat insulation member 140 may include a plurality of horizontal lines and vertical lines formed within the region of the vent 115. If the vent 115 is deformed to protrude due to the operation thereof, fracture may suitably occur around contact points at which the stitches 141 intersect each other, and thus the vent 115 may be deformed and opened. In one or more embodiments, because cutting is also made along the longitudinal directions of the horizontal and vertical lines, and thus, if deformation occurs first in a corresponding region of the vent 115, it is also possible to allow the internal gas to be discharged first according to the cutting in the longitudinal directions.

Next, referring to FIG. 3B, in addition to the shape of the stitch 141 of FIG. 3A, a stitch 141 that forms an outline may further be provided along the shape of the vent 115. In one or more embodiments, through the stitch 141, the vent 115 may also be opened along the outline. In one or more embodiments, the stitch 141 may be opened along the outline according to the deformed shape of the vent 115, and thus it may be suitable for the stitch 141 to be first partially cut in the shape of the outline.

In one or more embodiments, referring to FIG. 3C, the stitch 141 may be configured in a "+" shape consisting of only one horizontal line and one vertical line. According to this configuration, the stitch 141 may be set so as to be cut in a "+" shape in the central region of the vent 115. In one or more embodiments, with this configuration, the opening operation of the vent 115 may be achieved at the central region thereof, and injection of a fire extinguishing agent toward the vent 115, or reducing or preventing the likelihood of a discharge material being sprayed toward surrounding secondary batteries 100, can also be facilitated.

Hereinafter, the opening operation of the vent of the secondary battery according to one or more embodiments will be further described.

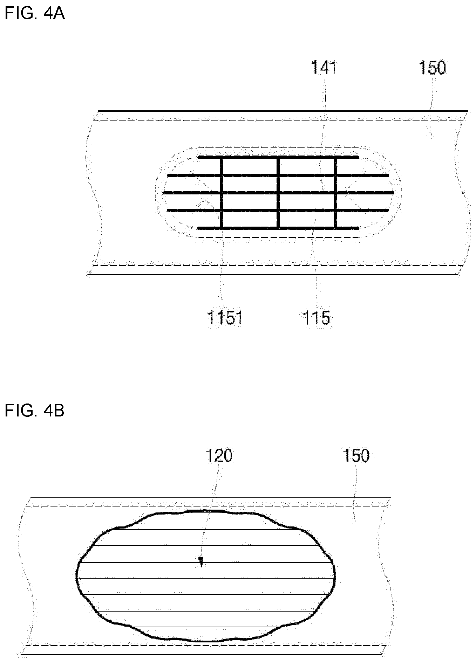

FIGS. 4A and 4B are schematic diagrams showing states before and after the operation of a vent in a secondary battery having a heat insulation member according to one or more embodiments.

As shown in FIG. 4A, the vent 115 may be provided on the short sides 111 of the case 110 of the secondary battery 100. The thickness of the vent 115 may be smaller than the thickness of the short sides 111. In one or more embodiments, the vent 115 may be provided in a roughly elliptical shape, and one or more notches 1151 having various shapes may be provided on the surface on which fracture begins during operation, as indicated by a thin dotted line.

In one or more embodiments, as described above, the stitches 141 of the heat insulation member 140 may be aligned and positioned on the outside of the vent 115.

As shown in FIG. 4B, if the vent 115 is operated, the notch 1151 is broken, and the case 110 may be opened toward the outside, for example, the outside of the short sides 111. In one or more embodiments shown, due to the shape of the notch 1151, the vent 115 may be separated into approximately four pieces (two large pieces and two small pieces) and may be opened toward the outside of the case 110. However, the number of pieces of the vent 115 is not limited to four, as shown in FIG. 4B, and it is also possible for the vent 115 to be composed of a variety of numbers of pieces depending on the design.

In one or more embodiments, the stitches 141 of the heat insulation member 140 may also be opened along with the opening operation of the vent 115. In one or more embodiments, depending on the arrangement of the stitches 141, it is possible for the stitches 141 to be opened partially or entirely. In one or more embodiments, it is also possible for a portion to be preferentially opened. In one or more embodiments, some of the stitches 141 may also be induced to be opened preferentially. For example, as shown in FIG. 4B, during the operation of the vent 115, some regions of the heat insulation member 140 may be torn starting from the stitches 141, and may eventually be opened in a substantially circular shape corresponding to the open shape of the vent 115. In one or more embodiments, some regions of the heat insulation member 140 may be opened in an oval shape.

In this way, in the present disclosure, the stitch 141 is provided in some regions of the heat insulation member 140 coupled to the vent 115, so the operating pressure may not be affected during the operation of the vent 115, thereby providing the secondary battery 100 without a change in the operating pressure of the vent 115. In one or more embodiments, after opening is fully completed, the electrode assembly 120 may be exposed through the short sides 111 of the case 110, and thus internal gas, etc. can be suitably discharged to the outside.

As described above, in the secondary battery according to the present disclosure, a heat insulation member is attached onto a vent, and thus, if an event occurs in a corresponding cell, damage to the vent may be reduced or prevented even if a discharge material generated scatters to the vent of an adjacent cell.

In one or more embodiments, the secondary battery according to the present disclosure may have a stitch corresponding to the vent on a heat insulation member, and thus may not interfere with the operation of the vent.

While the foregoing embodiment has been described to practice the secondary battery according to embodiments of the present disclosure, it should be understood that the embodiments described herein should be considered in a descriptive sense only and not for purposes of limitation, and various changes in form and details may be made therein without departing from the scope of the disclosure as defined by the following claims, with functional equivalents thereof to be included therein.

## Claims

1. A secondary battery comprising:
a case having a vent on one side;
an electrode assembly in the case;
a pair of terminals coupled to respective sides of the case, and electrically connected to the electrode assembly; and
a heat insulation member coupled to a surface of the case, and covering a region corresponding to the vent.

2. The secondary battery as claimed in claim 1, wherein the vent is on a short side of the case between the terminals.

3. The secondary battery as claimed in claim 1 or claim 2, wherein the heat insulation member comprises an insulating material containing MICA.

4. The secondary battery as claimed in any one of claims 1 to 3, wherein the heat insulation member is attached onto the surface of the case.

5. The secondary battery as claimed in any one of claims 1 to 4, wherein the heat insulation member is coupled to the surface of the case through an insulation film positioned on the case.

6. The secondary battery as claimed in any one of claims 1 to 5, wherein the heat insulation member further comprises an adhesive layer on a side facing the case.

7. The secondary battery as claimed in any one of claims 1 to 6, wherein the heat insulation member further comprises a stitch corresponding to the vent of the case.

8. The secondary battery as claimed in claim 7, wherein the stitch matches within the region of the vent.

9. The secondary battery as claimed in claim 7 or claim 8, wherein the stitch comprises at least two lines that cross each other within the region of the vent.

10. The secondary battery as claimed in any one of claims 7 to 9, wherein the stitch comprises a line along an outline of the vent.

11. The secondary battery as claimed in any one of claims 7 to 10, wherein the stitch comprises perforations.
